# FASCICULE DE BREVET EUROPEEN

(11) **EP 2 109 991 B1**
(45) Date de publication et mention de la délivrance du brevet: **30.10.2019**
(21) Numéro de dépôt: 08762054.8
(22) Date de dépôt: 08.02.2008
(51) Int. Cl.: H04M 7/00

(54) **OPTIMISATION DE L'ACHEMINEMENT DE COMMUNICATIONS ENTRE UNE PLURALITE DE DOMAINES DE TELEPHONIE**
OPTIMIERUNG DER LEITWEGLENKUNG VON KOMMUNIKATIONEN ZWISCHEN MEHREREN TELEFONIEDOMÄNEN
METHOD FOR OPTIMISING THE ROUTING OF COMMUNICATIONS BETWEEN PLURALITY OF TELEPHONY DOMAINS, AND CORRESPONDING SIGNAL, DEVICE AND COMPUTER SOFTWARE

(30) Priorité: 16.02.2007 FR 0701155
(43) Date de publication de la demande: 21.10.2009
(73) Titulaire: Orange, 75015 Paris (FR)
(72) Inventeur: BOUCADAIR, Mohamed, F-14000 Caen (FR)
(74) Mandataire: Vidon Brevets & Stratégie
(86) Numéro de dépôt international: PCT/FR2008/050200
(87) Numéro de publication internationale: WO 2008/110723

(56) Documents cités:
- WO-A-2005/027436
- US-A1- 2003 235 280
- US-A1- 2005 135 254
- US-B1- 6 876 627

## Description

### 1 Domaine de l'invention

La présente invention se rapporte au domaine de la téléphonie sur des réseaux de type Internet, ou IP (« Internet Protocol », pour « protocole Internet »). L'invention concerne plus précisément l'optimisation de l'acheminement de communications entre une pluralité de domaines de téléphonie, et notamment de la mise en place des chemins de routage entre une source et une destination. Ces chemins de routage, qui traversent souvent des domaines de téléphonie gérés par des opérateurs différents (également appelés fournisseurs de services), sont annoncés par l'intermédiaire d'un signal d'information, à l'ensemble des domaines traversés.

Plus particulièrement, l'invention porte sur la prise en compte des phénomènes de congestion entre opérateurs (ou fournisseurs d'accès) et l'amélioration de la réactivité entre domaines de téléphonie distants.

Un réseau IP est un réseau fédérateur adopté par un ensemble d'opérateurs pour mutualiser leurs offres de service hétérogènes, dont la téléphonie IP, couramment référencée par le sigle VoIP (de l'anglais « Voice over IP » pour « Voix sur IP »), plus généralement groupée sous le thème des services conversationnels (englobant également des applications vidéo, de type visiophonie ou vidéoconférence).

Le déploiement de telles applications de voix ou de vidéo en temps réel vers le tout IP, et en conséquence la migration du réseau commuté, traditionnellement désigné par le RTC (Réseau Téléphonique Commuté), est un objectif des opérateurs. Ceci suppose que ces opérateurs puissent fournir une couverture globale, à l'échelle mondiale, de ces services. Ceci ne se résume pas seulement par une nécessité d'assurer des points de présence sur l'ensemble du globe, mais suppose également la capacité d'offrir aux clients la possibilité de joindre n'importe quelle destination téléphonique (y compris les clients des autres opérateurs).

Cette couverture globale est obtenue par l'établissement d'accords d'interconnexion avec d'autres opérateurs, ou fournisseurs de service tiers, afin de pouvoir étendre la portée d'un service en dehors des bordures administratives de chaque fournisseur de service.

Dans le fil de cette dynamique, on prévoit que la coopération entre les fournisseurs de service de VoIP/ToIP (« Telephony over IP » pour « Téléphonie sur IP ») s'intensifiera dans le court ou le moyen terme. Cette intensification doit permettre la transmission du trafic multimédia (principalement lié à la voix ou la vidéo) vers des points de terminaison se trouvant en dehors d'un seul domaine de gestion de la téléphonie sur IP (encore appelé « ITAD » de l'anglais « IP Telephony Administrative Domain ») géré par un seul opérateur (encore appelé fournisseur de service. Ces deux termes sont utilisés indifféremment dans le reste de ce document). Ces coopérations entre fournisseurs de service sont d'autant plus importantes que les accords classiques de type bilatéraux ne permettent pas d'assurer la couverture globale requise par les opérateurs et leurs clients.

De plus, les offres de téléphonie déployées au dessus d'un réseau IP doivent répondre à des contraintes de qualité de service telles qu'une haute disponibilité et une forte tolérance aux pannes. La contrainte de disponibilité du service ne concerne pas uniquement les domaines de téléphonie (c'est-à-dire la couche service), mais aussi les nœuds qui gèrent le routage des flux IP (c'est-à-dire le niveau transfert).

Dans la suite de ce document on utilise les termes suivants :
- LS (« Location Server » pour « Serveur de Localisation ») : c'est une entité ou un élément fonctionnel d'un domaine de téléphonie (ITAD) qui gère les localisations des clients et des routes d'un ITAD local. Cette entité peut s'interfacer avec un LS voisin pour apprendre la localisation des clients gérés par d'autres ITAD ;
- AS (« Autonomous System » pour « Système Autonome ») : C'est un ensemble de ressources IP gérées par une seule entité administrative, également appelée « fournisseur de connectivité IP ». Dans le cadre du protocole de routage inter domaines BGP (de l'anglais « Border Gateway Protocol », [RFC1771]), chaque AS est identifié par un identifiant unique.

Cet AS est également appelé « Domaine de Transfert IP» ;
- « Couche ou niveau Transfert » : les deux couches OSI Réseau et Transport, dans l'ensemble de ce document.

### 2 Solutions de l'art antérieur

### 2.1 Art antérieur

En téléphonie « classique » (RTC, Réseau Téléphonique Commuté), les opérateurs de téléphonie établissent des accords bilatéraux pour étendre la couverture globale du service téléphonique. Le niveau de couverture atteint dépend essentiellement du nombre d'accords établis. On peut très schématiquement considérer que deux catégories d'opérateurs de télécommunications existent : les opérateurs locaux et/ou nationaux et les opérateurs mondiaux. Les grands opérateurs mondiaux établissent un grand nombre d'accords et peuvent ainsi joindre la plupart des destinations existantes. Les opérateurs locaux établissent seulement un nombre limité d'accords et par exemple seulement un ou deux avec de grands opérateurs. Ainsi, un opérateur national historique d'un pays en voie de développement va établir des accords avec d'autres opérateurs nationaux et un ou deux accords avec des opérateurs mondiaux pour évacuer les communications vers le reste du monde.

Actuellement, la plupart des opérateurs migrent, ou envisagent de migrer, leurs réseaux RTC vers des solutions et des infrastructures basées sur le réseau « IP ». Pour accompagner le déploiement de services de « VoIP », l'IETF (« Internet Engineering Task Force » pour « Groupe de développement de l'internet ») a lancé de nombreux travaux de standardisation. Plusieurs protocoles ont ainsi été spécifiés parmi lesquels on peut citer :
- SIP (« Session Initiation Protocol » pour « Protocole d'initialisation de session »),
- SDP (« Session Description Protocol » pour « protocole de description de session »),
- RTP (« Real-time Transfer Protocol » pour « Protocole de transfert en temps réel »),
- RTCP (« Real-time Transfer Control Protocol » pour « Protocole de contrôle de transfert en temps réel »),
- MGCP (« Multimedia Gateway Control Protocol » pour « Protocole de contrôle d'épine dorsale multimédia »),
- SAP (« Session Announcement Protocol » pour « Protocole d'annonce de session ») et
- TRIP (Telephony Routing Over IP, [RFC3219] pour «Routage de la téléphonie sur IP »).

Ces protocoles répondent à des besoins différents et intègrent en particulier la signalisation et la commande des appels, l'échange des flux média et leur contrôle et l'échange d'informations pour le routage des appels.

Pour plus d'information sur le protocole TRIP, on se référera au document de normalisation RFC3219. La présente invention peut notamment, mais non exclusivement, être mise en œuvre dans le cadre de cette spécification RFC3219.

Le protocole TRIP permet à des ITAD interconnectés d'échanger l'ensemble des destinations qu'ils peuvent joindre et facilite en particulier la sélection des « Gateway » (« Autoroute » ou « épine dorsale ») les plus appropriées pour évacuer du trafic de téléphonie IP vers le réseau RTC. Le protocole TRIP est mis en œuvre par des LS (« Location Servers » pour « Serveurs de localisation ») qui propagent des routes TRIP contenant des attributs permettant de définir les routes en question. L'utilisation de ce protocole particulier est indépendante du type du protocole de signalisation déployé pour l'établissement effectif des appels. Le protocole TRIP peut être utilisé conjointement avec SIP, H.323 ou tout autre protocole de signalisation.

Chaque LS maintient une base de données de routage locale dite TRIB (« Telephony Routing Information Database » pour « Base de données d'information de routage de la téléphonie »). Cette base de routage est alimentée par des annonces reçues des LS voisins (d'un autre domaine de téléphonie, par exemple). Le fonctionnement du protocole TRIP est similaire à celui du protocole BGP (« Border Gateway Protocol »). Les annonces entre LS voisins sont effectuées sous la forme de messages de mise à jour de route, appelés messages «UPDATE ». Ces messages sont définis par le protocole TRIP et sont échangés entre les LS pour informer un LS du même domaine ou du domaine voisin des routes disponibles.

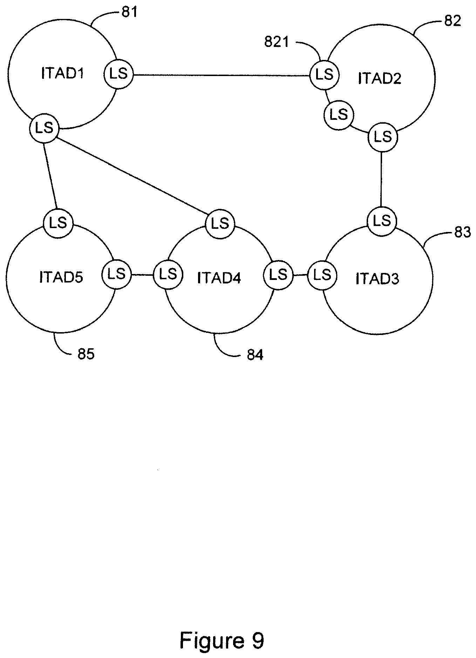

On décrit, en relation avec la figure 9, l'activation du protocole TRIP entre différents ITAD (on utilise également par la suite le terme « domaine téléphonique» ou seulement « domaine » pour désigner un ITAD), chaque ITAD étant administré par un seul opérateur de téléphonie. Ces opérateurs disposent chacun d'un ou plusieurs LS et d'un ou plusieurs serveurs de proximité (ou PS, pour « Proxy Server »). Chaque LS maintient une base de routage qu'il alimente avec des annonces reçues de ses voisins (situés dans d'autres domaines) et des LS de son propre domaine. Ces annonces sont mises à jour et redistribuées à d'autres voisins si les accords le permettent. Chaque PS est responsable de l'établissement des appels et le traitement des messages de signalisation reçus de la part des clients ou d'autres PS.

Dans la figure 9, seuls les LS sont représentés. Ainsi l'ITAD4 84, par exemple, met à jour les annonces reçues de l'ITAD5 85 et les re-propagent à l'ITAD3 83. Il convient de noter qu'un ITAD n'est pas nécessairement déployé sur un seul « domaine de Transfert IP», également appelé un AS.

Du point de vue routage, un LS peut traiter trois types de routes:
- les routes externes (« External Routes »), fournies par des LS situés dans des ITAD voisins ;
- les routes internes (« Internai Routes »), fournies par des LS situés dans le même ITAD ;
- les routes locales (« Local Routes »), configurées localement dans chaque LS pour être injectées dans les processus TRIP. Cette opération est réalisée soit par configuration statique ou par redistribution d'informations provenant d'autres protocoles de routage.

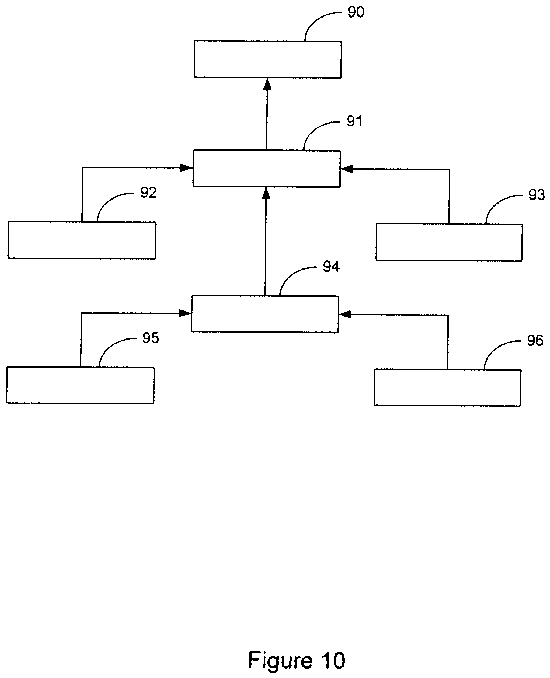

Ainsi, quatre types de « TRIB » sont gérés par un LS comme l'illustre la figure 10. Ces tables existent pour un même LS. Les relations entre ces tables sont illustrées en relation avec la figure 10. Ces tables comprennent :
- Adj-TRIBs-In 92 (« Adjacent TRIB in ») : cette table stocke les informations de routage véhiculées par des messages UPDATE. Ces informations de routage, également appelées « routes », sont les entrées d'un processus de sélection 91 de routes (« Décision Process »). Un LS donné maintient une table Adj-TRIB-In 92 (pour « adjacent TRIB-in », qui stocke l'ensemble d'annonces de routes reçues de la part d'un LS adjacent) par LS voisin ;
- Ext-TRIB 94 (« External TRIB ») : cette table contient le résultat d'un processus de sélection de routes appliqué aux routes externes 95 (« Adj-TRIBs-IN ») et locales 96 (« Local Routes »). Une seule table Ext-TRIB (« external TRIB ») est maintenue par LS. Les techniques de l'art antérieur ne permettent de choisir qu'une seule route par destination ;
- Loc-TRIB 90 (« Local TRIB ») : cette table contient les routes locales résultant de l'application des politiques de routage locales à chaque LS ;
- Adj-TRIBs-Out 93 (« Adjacent TRIB out ») : cette table contient les routes que le LS local annoncera à ses pairs.

Le protocole TRIP permet de stocker une seule et unique route par destination dans la TRIB locale. Cette route est celle qui est annoncée aux « pairs » (« peers » en anglais) d'un LS donné, c'est-à-dire aux LS voisins (qui peuvent être dans le même ITAD ou dans un ITAD différent), lorsqu'un accord existe entre eux. Pour ce faire, TRIP met en œuvre un processus de sélection de route pour déterminer la meilleure route à stocker dans sa TRIB locale. Si une route vers cette destination existe déjà, alors le processus de sélection est invoqué. Si cette nouvelle route est choisie par le processus, elle remplace l'ancienne dans la TRIB locale.

Les documents WO2005/027436 et US2003/235280 constituent des exemples d'art antérieur.

### 2.2 Inconvénients de l'art antérieur

Un inconvénient de cette technique de l'art antérieur est quelle ne permet pas la prise en compte et la gestion de blocages, ou de phénomènes de congestion, dans un domaine ou de congestion des liens externes de ce domaine avec d'autres domaines voisins. Ces phénomènes peuvent par exemple être dus à des surcharges (nombres de communications à traiter simultanément ou pannes, par exemple). En d'autres termes, la technique actuelle ne propose pas de moyens pour gérer la résilience des routes annoncées par le protocole TRIP, et notamment faire face à des phénomènes de congestion des routes de téléphonie entre des ITAD.

Un phénomène de congestion peut correspondre notamment (et non seulement) à :
- une incapacité d'un ITAD à traiter des appels suite à une insuffisance ou une indisponibilité de ressources pour l'acheminement des appels ;
- une impossibilité, pour un ITAD donné, de prendre en compte des appels formulés par des abonnés du domaine ; et/ou
- une impossibilité de router des appels vers une destination donnée, tel qu'un autre ITAD, ou encore une difficulté à transmettre des appels vers des abonnés de l'ITAD.

Ceci peut être dû par exemple à l'utilisation de la bande passante (BP) réservée aux flux téléphoniques (la BP disponible est proche de zéro), à un taux de sessions actives proche du seuil supporté par un équipement téléphonique, à un lien IP indisponible, à un lien entre deux ITAD voisins indisponible ou à une valeur de BP disponible proche de zéro.

De tels phénomènes peuvent notamment se produire au sein de passerelles d'interconnexion des domaines de téléphonie (ITAD). En effet, selon la technique actuelle, une seule et unique route est annoncée, si elle existe, pour une destination donnée. Or, dans le cadre de la VoIP/ToIP, des phénomènes de congestion peuvent survenir entre les domaines de téléphonie. A ce jour, lorsqu'un phénomène de congestion est détecté au sein d'un domaine téléphonique, il
n'existe aucun mécanisme permettant à l'opérateur gérant ce domaine d'informer les opérateurs des domaines voisins de l'existence de ce phénomène de congestion. Les domaines distants ne possédant pas de mécanismes les notifiant quant à l'état d'une route (congestionnée ou pas), continuent de sélectionner cette route. Les communications ne peuvent en conséquence pas aboutir.

L'invention permet d'apporter une solution à ce problème technique.

### 1 Résumé de l'invention

La solution proposée par l'invention permet de pallier ces inconvénients de l'art antérieur, grâce à un procédé d'optimisation de l'acheminement de communications entre une pluralité de domaines de téléphonie sur IP.

L'étendue de la protection n'est définie que par les revendications en annexe.

Selon l'invention, un tel procédé comprend :
- une phase de détection d'un phénomène de congestion ou de risque de congestion dans un premier domaine de téléphonie sur IP (on parle de notification de congestion et/ou de pré-congestion (permettant d'anticiper sur une congestion)) ;
- une phase de transmission, dans un message de signalisation, d'au moins une information relative audit phénomène de congestion ou de risque de congestion, dite information de congestion, à destination d'au moins un deuxième domaine de téléphonie sur IP.

Ainsi l'invention permet de prendre en compte des phénomènes de congestion ou de pré-congestion qui peuvent survenir au sein des domaines de téléphonie sur IP, également nommés ITAD. Cette prise en compte permet à un domaine de transmettre une information relative au phénomène à des domaines voisins. Cette information peut, le cas échéant, permettre aux autres domaines de réagir ou à tout le moins d'être avertis de la survenance de la congestion.

Selon un mode de réalisation de l'invention, ledit message de signalisation est un message de définition d'une route de téléphonie, permettant d'atteindre une destination téléphonique donnée (encore appelé message d'annonce de route).

Ainsi, l'invention permet de transmettre l'information de congestion ou de pré-congestion (nous désignerons dans le reste de ce document ce phénomène seulement par « congestion ») par l'intermédiaire d'une route de téléphonie. En effet, les protocoles de communication entre les domaines de téléphonie sur IP permettent aux ITAD de s'échanger des routes pour joindre des destinations données. L'invention tient compte de ces échanges en insérant l'information représentative de la congestion au niveau de ces routes. Il n'est donc pas nécessaire de définir un nouveau protocole d'échange d'information entre les domaines de téléphonie sur IP, ce qui évite de devoir modifier les architectures des différents domaines. Un champ spécifique, nommé champ « C » peut être utilisé pour transmettre l'information de congestion au sein des routes échangées. Ce champ « C » peut par exemple être codé sur un bit, afin d'indiquer qu'une route donnée est congestionnée (valeur 1) ou non congestionnée (valeur 0).

Selon une caractéristique particulière de l'invention ledit procédé comprend :
- une phase préalable de négociation d'une capacité d'échange desdites informations de congestion, entre lesdits domaines de téléphonie sur IP ;
- une phase de propagation initiale d'une route principale entre lesdits premier et deuxième domaines de téléphonie sur IP.

Selon un mode de réalisation particulier de l'invention, ladite phase de détection comprend :
- une étape de mesure d'au moins une information représentative d'un niveau de charge et/ou d'un taux de rejet de communication au sein dudit premier domaine de téléphonie sur IP ;
- une étape de comparaison de ladite information représentative d'un niveau de charge et/ou d'un taux de rejet avec au moins un seuil prédéterminé, délivrant ladite information de congestion ;
et ladite phase de transmission comprend :
- une étape de propagation d'au moins une route de secours de ladite route principale.

Ainsi, le procédé selon l'invention permet aux différents domaines de téléphonie sur IP de prendre en compte leurs capacités d'échange respectives. En effet, les domaines de téléphonie sur IP sont généralement gérés par des opérateurs de téléphonie différents qui n'implémentent pas obligatoirement les protocoles d'échange d'informations entre domaines de la même manière. Cette caractéristique permet de pallier cet inconvénient de l'art antérieur en permettant la négociation des capacités d'échange des domaines préalablement à une transmission d'informations. De plus, ceci permet de mesurer des valeurs représentatives des phénomènes de congestion telles que des taux de rejet de nouveaux appels ou des contrôles de charge des équipements de communication. Il est ainsi possible de connaître en temps réel l'état d'un domaine de téléphonie sur IP et de transmettre une route de secours soit au début de l'occurrence de la congestion, soit préalablement, en état de pré-congestion.

Selon un mode de réalisation particulier de l'invention, ledit procédé comprend, dans au moins un deuxième domaine :
- une étape de réception de la ou desdites routes de secours ;
- une étape d'ajout de la ou desdites routes de secours à un ensemble de routes comprenant également ladite route principale.

Ainsi, l'invention peut prendre en compte plusieurs routes pour atteindre une même destination téléphonique. En effet, selon les techniques de l'art antérieur fondées sur le protocole TRIP, les domaines de téléphonie sur IP ne s'échangent qu'une seule et unique route par destination. Il n'existe donc, à un instant donné, dans ces implémentations de TRIP de l'art antérieur, qu'un seul chemin, à partir d'un domaine de téléphonie sur IP donné, pour joindre une destination donnée. L'invention, selon cette approche, permet de pallier cet inconvénient en ajoutant de nouvelles routes permettant de joindre la destination donnée. La route principale n'est pas écrasée, et peut donc toujours être utilisée par le composant du domaine de téléphonie sur IP, par exemple pour permettre le maintien d'une communication qui a déjà débuté.

Les routes de secours peuvent être propagées simultanément, audit deuxième domaine de téléphonie sur IP.

Ainsi, lors d'une occurrence d'un phénomène de congestion, le procédé selon l'invention, dans un mode de réalisation particulier, permet de propager simultanément un ensemble de routes de secours permettant de joindre une même destination. Le domaine de téléphonie sur IP dispose alors, pendant la durée du phénomène de congestion, de plusieurs routes parmi lesquelles il effectuera un choix lorsqu'un abonné de ce domaine cherchera à joindre une destination située dans le domaine, ou passant par le domaine, dont il a reçu les routes de secours.

Les routes de secours dudit ensemble de routes de secours peuvent également être propagées audit deuxième domaine de téléphonie sur IP de façon successive, en fonction d'occurrences de phénomènes de congestion successivement observées sur lesdites routes de secours préalablement propagées.

Ainsi, on ne propage les différentes routes constituant l'ensemble des routes de secours que suite à la congestion d'une route de secours préalablement transmise. Les routes de secours s'ajoutent aux routes existantes au sein des domaines de téléphonie sur IP. Dans un mode de réalisation particulier de l'invention appliqué au protocole TRIP, les routes de secours s'ajoutent aux tables de routage des serveurs de localisation composant le domaine.

Dans ce cas, le procédé peut comprendre une étape de sélection d'une route de secours parmi au moins deux routes de secours disponibles dans ledit ensemble de routes, en fonction d'une information de sélection transmise avec chacune desdites routes de secours.

La route de secours choisie sera ainsi la plus efficace, selon le critère de sélection considéré, parmi celles disponibles.

Selon un mode de réalisation particulier de l'invention, ledit procédé comprend, dans au moins un deuxième domaine :
- une étape de réception de ladite route de secours ;
- une étape de substitution d'une route courante par ladite route de secours.

Ainsi, selon cette caractéristique, le procédé peut prendre en compte l'occurrence de phénomènes de congestion en permettant la propagation d'une route de téléphonie de secours. En effet, dans le cas, par exemple, d'un échange de routes entre les domaines de téléphonie sur IP par le biais du protocole TRIP, l'invention permet de pallier les phénomènes de congestion en substituant une route de téléphonie de secours à une route de téléphonie principale préalablement propagée entre deux domaines, en évitant ainsi que de nouveaux appels téléphoniques empruntent le domaine de téléphonie sur IP congestionné.

Selon un mode de réalisation particulier de l'invention, ledit procédé comprend une étape de remplacement de ladite route principale par ladite route de secours au sein d'une table de routage d'un serveur de localisation situé au sein dudit deuxième domaine de téléphonie sur IP.

Dans ce mode de réalisation particulier de l'invention, la route principale, préalablement enregistrée au sein des serveurs de localisation présents dans le deuxième domaine de téléphonie sur IP est remplacée par la route de secours. Un tel remplacement a pour avantage de ne pas augmenter le volume des tables de routage présentes dans le serveur de localisation des domaines de téléphonie sur IP

Ladite route de secours, devenue route courante, peut récursivement faire l'objet d'un remplacement par une nouvelle route de secours lors d'une occurrence d'un nouveau phénomène de congestion sur ladite route de secours.

Ainsi, l'invention ne limite pas le remplacement de la route principale par une seule route de secours. En effet, la survenance de phénomènes de congestion
n'est pas uniquement limitée aux routes principales et peut également se produire au sein des routes de secours. L'invention permet donc de pallier cet inconvénient en permettant le remplacement d'une route de secours par une nouvelle route de secours et ce autant de fois que nécessaire, tant que des phénomènes de congestion se produisent.

L'invention concerne également un signal échangé entre deux domaines de téléphonie sur IP d'un système de communication mettant en œuvre une pluralité de domaines de téléphonie sur IP, et véhiculant au moins un message de signalisation.

Selon l'invention un tel message de signalisation comprend au moins un champ indiquant un état de congestion ou de risque de congestion d'au moins un domaine de téléphonie sur IP.

Selon une caractéristique particulière de l'invention ledit message de signalisation comprend en outre au moins un champ permettant d'identifier au moins une route passant par ledit domaine.

Selon une caractéristique particulière de l'invention ledit message de signalisation comprend un attribut comprenant les champs suivants :
- un champ d'indication de congestion (« Flag ») ;
- un champ d'indication d'un numéro de route de secours (« Path Identifier ») ;
- un champ de définition d'une famille d'adresses (« Address family ») pour ladite route de secours ;
- un champ de définition d'un protocole d'application (« Application Protocol ») associé à ladite route de secours;
- un champ de définition d'une longueur d'adresse (« Length ») ;
- un champ d'indication de ladite adresse (« Address »).

L'invention concerne également un équipement d'acheminement d'au moins une route de téléphonie au sein d'un domaine de téléphonie sur IP.

Selon l'invention, un tel équipement comprend des moyens d'acheminement de communications entre une pluralité de domaines de téléphonie sur IP, lesdits moyens d'acheminement comprenant :
- des moyens de détection d'un phénomène de congestion ou de risque de congestion dans un premier domaine de téléphonie sur IP ;
- des moyens de transmission, dans un message de signalisation, d'au moins une information relative audit phénomène de congestion ou de risque de congestion, dite information de congestion, à destination d'au moins un deuxième domaine de téléphonie sur IP.

Plus généralement, un tel dispositif comprend des moyens de mise en œuvre des étapes du procédé d'optimisation, tel que décrit précédemment.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'optimisation tel que décrit précédemment.

### 2 Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre le format d'un attribut « Capability » ;
- la figure 2 présente le format conventionnel de l'attribut « TRIP Route » selon la spécification RFC3219 ;
- la figure 3 présente le format du champ « TRIP Route » modifié selon l'invention pour le transfert de routes multiples ;
- la figure 4 illustre le format du champ « Capability Value » du nouvel attribut « Multiple Route Capability» spécifique à l'invention ;
- la figure 5 présente le format du champ « TRIP Route » modifié selon l'invention pour le transfert de routes de secours ;
- la figure 6 décrit une procédure de remplacement de route d'acheminement en lien avec la détection de phénomènes de congestion ;
- les figures 7A et 7B illustrent schématiquement, sur un exemple, une mise en œuvre de l'invention :

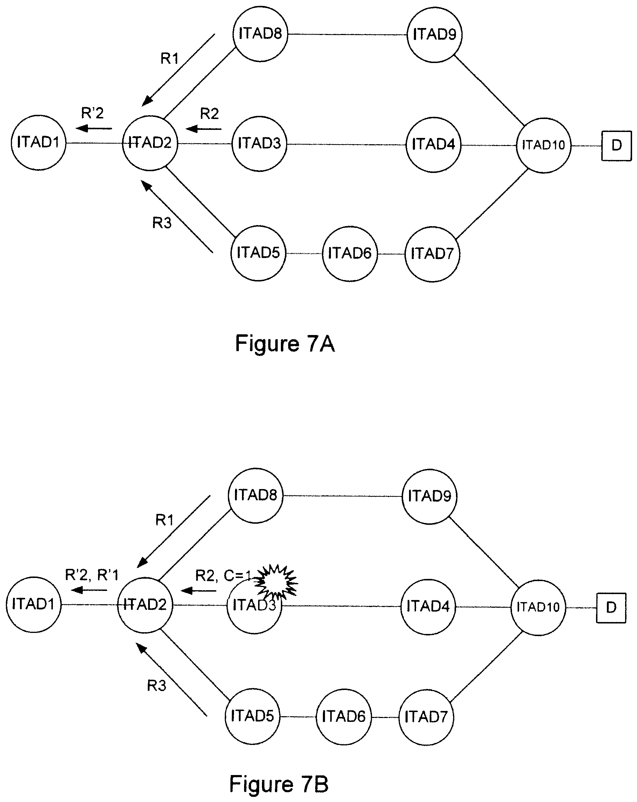

   - figure 7A : situation normale, en l'absence de congestion ;
   - figure 7B : détection d'une congestion ;

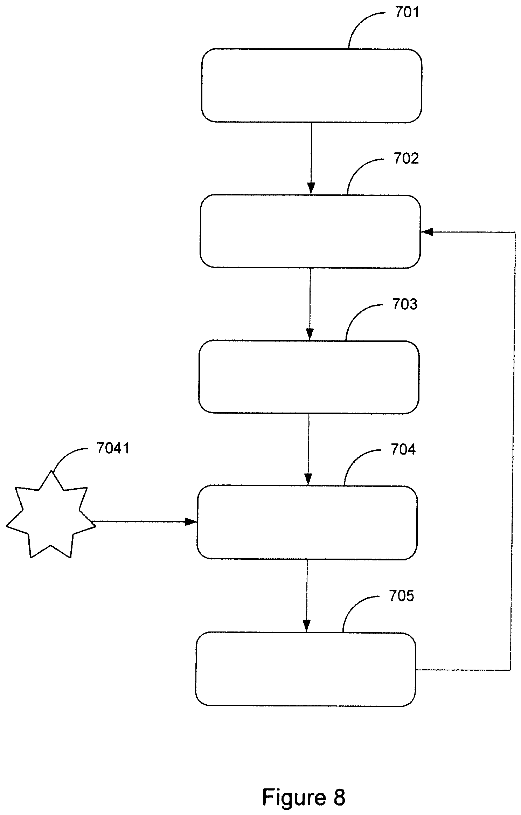

- la figure 8 décrit une procédure d'activation de la prise en charge des routes multiples en lien avec la détection de phénomènes de congestion ;
- la figure 9, présentée en relation avec l'art antérieur, présente un exemple d'architecture d'un réseau avec activation du protocole TRIP ;
- la figure 10 illustre la structure des bases de données de routage (TRIB) utilisées par les serveurs de localisation (LS) routant les appels dans les domaines de téléphonie IP (ITAD) présentés en figure 9.

### 3 Description détaillée de l'invention

microprocesseur, et comprenant des instructions de code de programme pour l'exécution du procédé d'optimisation tel que décrit précédemment.

### 4 Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

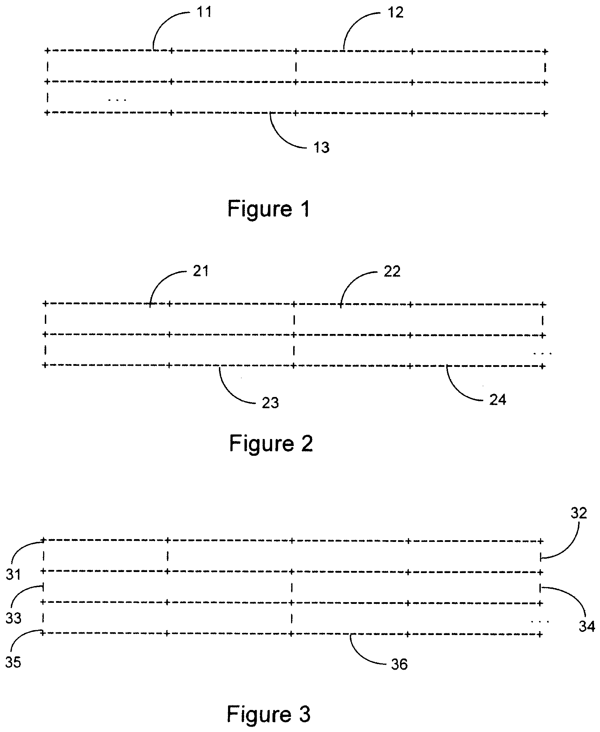

- la figure 1 illustre le format d'un attribut « Capability » ;
- la figure 2 présente le format conventionnel de l'attribut «TRIP Route » selon la spécification RFC3219 ;
- la figure 3 présente le format du champ « TRIP Route » modifié selon l'invention pour le transfert de routes multiples ;

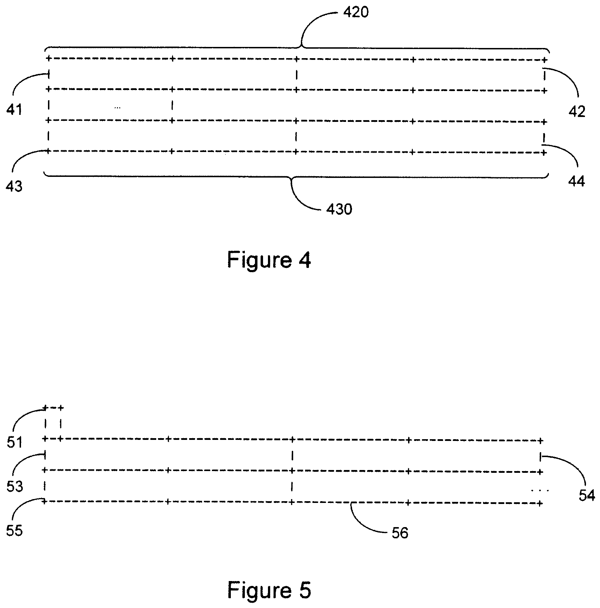

- la figure 4 illustre le format du champ « Capability Value » du nouvel attribut « Multiple Route Capability» spécifique à l'invention ;
- la figure 5 présente le format du champ « TRIP Route » modifié selon l'invention pour le transfert de routes de secours ;

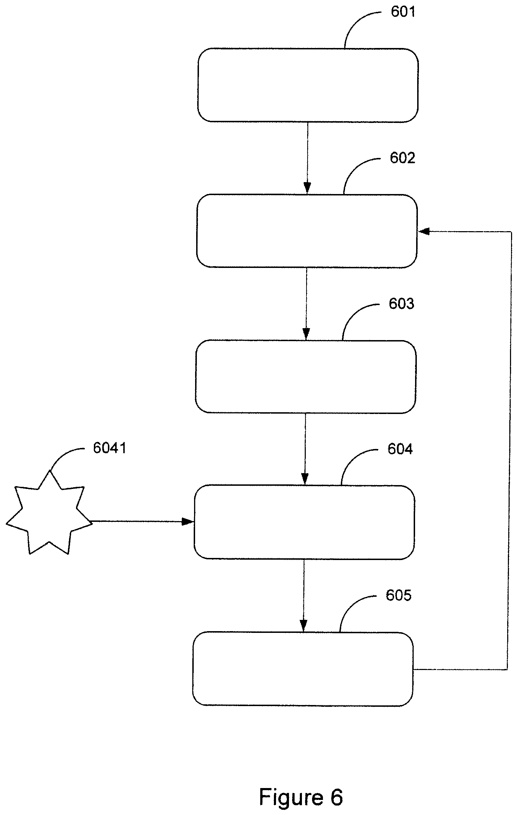

- la figure 6 décrit une procédure de remplacement de route d'acheminement en lien avec la détection de phénomènes de congestion ;
- les figures 7A et 7B illustrent schématiquement, sur un exemple, une mise en œuvre de l'invention :
   - figure 7A : situation normale, en l'absence de congestion ;
   - figure 7B : détection d'une congestion ;
- la figure 8 décrit une procédure d'activation de la prise en charge des routes multiples en lien avec la détection de phénomènes de congestion ;
- la figure 9, présentée en relation avec l'art antérieur, présente un exemple d'architecture d'un réseau avec activation du protocole TRIP ;
- la figure 10 illustre la structure des bases de données de routage (TRIB) utilisées par les serveurs de localisation (LS) routant les appels dans les domaines de téléphonie (ITAD) présentés en figure 9.

### 5 Description détaillée de l'invention

On présente ci-après une mise en œuvre de l'invention mettant en œuvre le protocole TRIP au niveau de la couche service. Cependant, il est clair que l'invention ne se limite pas à ce protocole particulier, mais peut également s'appliquer à tout protocole d'échange de routes entre opérateurs de téléphonie IP. A noter que cette invention ne s'applique pas seulement à la téléphonie mais également, notamment, à la vidéoconférence inter-domaines, messagerie instantanée inter-domaines, services de présence inter-domaines, et plus généralement à tout service nécessitant la localisation de ressources au delà des frontières administratives d'un seul fournisseur de services.

### 5.1 Rappel du principe de l'invention

L'invention propose donc de doter les plateformes de téléphonie sur IP de moyens simples et efficaces pour pallier des phénomènes de congestion inter domaines, c'est-à-dire entre différents ITAD. La présente description propose deux modes de réalisation de l'invention appliquée au protocole TRIP. Il est ainsi possible de procéder à l'optimisation de l'acheminement de communications entre les domaines de téléphonie en fonction de diverses situations de congestion qui peuvent survenir au sein des domaines de téléphonie.

Le principe général de l'invention repose sur une détection et un traitement des phénomènes de congestion. Ainsi, le procédé de l'invention propose de détecter des phénomènes de congestion dans ou entre les ITAD et d'offrir des solutions de remplacement, ou de secours, permettant d'acheminer le trafic dans de bonnes conditions tout en évitant les domaines dans lesquels les phénomènes de congestion se produisent. En d'autre termes, l'objectif du mécanisme de l'invention est de permettre au système téléphonique (i.e. les éléments de contrôle dans un ITAD) de réagir lorsque des phénomènes de congestion sont observés localement ou le long d'un chemin d'ITAD pour joindre des destinations téléphoniques distantes (i.e. attachées à d'autres ITAD que le domaine local).

Ces solutions peuvent être la mise en place d'une nouvelle route d'acheminement du trafic qui permet d'éviter le domaine de téléphonie dans lequel se produit la congestion, ou préalablement à la survenance de phénomènes de congestion (situation dite de pré-congestion), par exemple par le biais de mécanismes de mesure ce qui permet d'assurer une prévention des phénomènes et le cas échéant de répartir la charge sur d'autres routes.

Selon les modes de réalisation de l'invention, de telles routes de secours peuvent ensuite être propagées à d'autres domaines de téléphonie voisins, soit par le biais d'un protocole de propagation de routes multiples, soit par la mise en œuvre d'un mécanisme de propagation classique.

Dans les deux modes de réalisation décrits, le procédé selon l'invention permet de détecter les phénomènes de congestion inter-domaines et permet aux domaines de téléphonies distants, de réagir afin de proposer une ou plusieurs nouvelles routes d'acheminement des appels qui permettent d'éviter la congestion. Dans ces modes de réalisation, une information de congestion ou de pré-congestion est véhiculée aux domaines voisins par l'intermédiaire (d'un signal) de propagation de routes d'appels.

Le protocole TRIP permet aux serveurs de localisation des domaines de téléphonie d'échanger des routes permettant de joindre des destinations par le biais de messages de mise à jour dits messages « UPDATE ». L'invention utilise ces messages afin de véhiculer l'information de congestion. Dans au moins un mode de réalisation particulier de l'invention, on véhicule par la même occasion une ou plusieurs routes de secours. Ces routes de secours sont alors utilisées par les serveurs de localisation voisins pour prendre en compte les difficultés de transfert liées à la congestion.

Selon l'un ou l'autre des deux modes de réalisation de l'invention, il est possible de véhiculer aux serveurs de localisation soit une seule route de secours, soit plusieurs routes. Dans l'un ou l'autre de ces cas, des nouveaux attributs (qui sont utilisés après l'échange des capacités « Capabilities » de transaction entre les serveurs de localisation dans des messages de type « OPEN ») sont définis au sein des messages de mise à jour de route afin que les serveurs mettant en œuvre le protocole TRIP soient à même d'échanger les informations pertinentes concernant ces nouvelles routes de secours. Ces attributs sont nommés « TRIP Route » et ils permettent, selon les cas de propager une route de secours d'une route congestionnée ou plusieurs routes (ils peuvent être assimilés à des itinéraires permettant d'atteindre une destination donnée).

Lorsque le phénomène de congestion prend fin, le procédé selon l'invention peut offrir la possibilité d'un retour aux routes précédemment utilisées. Ainsi, la modification des routes au sein des domaines de téléphonie n'est que temporaire.

Ainsi que cela a été présenté, afin de pouvoir échanger des itinéraires (des routes) entre eux, des serveurs de localisation (LS) voisins qui font partie de deux domaines de téléphonie voisins négocient, avant l'échange effectif de route, leurs capacités de gestion respectives (« Capabilities »), en termes d'extensions supportées, comme décrit dans la RFC3219. Le format de l'attribut optionnel, c'est-à-dire l'attribut « Capability » est décrit par la figure 1. On note que cet attribut est optionnel et n'est pas forcément supporté par toutes les implémentations TRIP.

Il contient trois champs 11, 12 et 13 :
- un premier champ 11 « Capability Code», d'une longueur de deux octets contient un code identifiant la « Capability » ;
- un second champ 12 « Capability Length », d'une longueur de deux octets également, contient la longueur de la « Capability » ;
- un troisième champ 13 « Capability Value », dont la taille est variable, contient la valeur de la « Capablity ».

Cette négociation de capacité permet, dans les deux modes de réalisation décrits par la suite, de s'assurer du bon fonctionnement des serveurs de proximité situés dans les différents domaines et notamment d'échanger des informations concernant les routes par le biais d'un attribut « TRIP Route » auquel les modes de réalisation présentés ci-dessous apportent des adaptations.

### 5.2 Premier mode de réalisation : propagation de routes multiples

Un premier mode de réalisation particulier du procédé selon l'invention consiste en une gestion de routes multiples au sein des domaines de téléphonie.

Cette mise en œuvre particulière de l'invention consiste donc à permettre au système téléphonique, à savoir les éléments de contrôle présents dans le domaine de téléphonie, de réagir lorsque des phénomènes de congestion sont observés localement ou le long d'un chemin d'ITAD (ou itinéraire) pour joindre des destinations téléphoniques distantes, attachées à des ITAD autres que le domaine de téléphonie local de l'utilisateur.

Pour ce faire, l'invention met en œuvre une phase d'activation d'un mécanisme de prise en charge de routes multiples afin d'échanger plusieurs routes vers une même destination au moins pendant la durée des phénomènes de congestion. Cette phase d'activation se présente sous la forme d'une phase préalable de négociation d'une capacité d'échange d'informations de congestion, entre les domaines de téléphonie par le biais de routes multiples servant une même destination. Puis, une fois que les phénomènes de congestion ne sont plus observés, le comportement précédent, sans le support de routes multiples, peut de nouveau être adopté entre des domaines voisins.

Ces nouvelles routes de contournement de congestion peuvent alors être exploitées par des serveurs de proximité (c'est-à-dire « Proxy Servers », PS) pour passer des appels téléphoniques vers des destinations téléphoniques distantes.

Une telle mise en œuvre, outre le fait de pallier les inconvénients précédemment cités, permet en outre d'optimiser la taille des tables de routage téléphonique. En effet, lors de l'activation d'un tel mécanisme de gestion de routes multiples, la taille des tables de routage des serveurs de proximité peut avoir tendance à augmenter de manière importante. Une telle augmentation est due à la maintenance nécessaire, au sein de ces tables, de nombreuses entrées permettant le routage des appels téléphoniques en passant par plusieurs routes différentes.

Ce mode de réalisation particulier de l'invention évite cet inconvénient en ne proposant l'installation d'une route supplémentaire que pour se prémunir des phénomènes de congestion.

Une telle route peut ainsi être utilisée comme route alternative ou de secours pour des appels inter-domaines traversant les domaines/liens/ressources réseaux congestionnés et peut être désinstallée une fois que les phénomènes de congestion ne sont plus observés. La procédure est réitérée autant de fois que nécessaire pour faire face aux demandes d'établissement d'appel.

Il est également possible de transmettre simultanément plusieurs routes permettant de contourner un domaine congestionné. Plusieurs routes vers la même destination téléphonique peuvent être installées dans une table de routage téléphonique locale d'un domaine lors des épisodes de congestion se produisant dans des domaines voisins. Il est alors possible de contourner des phénomènes de congestion sans pour autant déstabiliser le trafic suivant la route utilisée par défaut.

De cette manière, la taille des tables de routage ne sera pas multipliée mais seulement augmentée d'autant de routes de secours, ou secondaires, qu'il y a de routes congestionnées et seulement le temps des phénomènes de congestion. De fait, la « taille critique » des tables de routage téléphonique n'est pas durablement atteinte car les routes de secours sont désinstallées une fois que les phénomènes de congestion ne sont plus d'actualité.

L'installation et la désinstallation des routes des tables de routage téléphoniques n'induisent pas de phénomènes d'instabilité ou d'oscillation du trafic téléphonique car les domaines téléphoniques traversés ont toujours une route vers la destination en question. Ainsi des boucles de routage (phénomène par lequel une route transite plusieurs fois par le même domaine avant d'atteindre sa destination) ne sont pas induites.

Dans les paragraphes suivants, on détaille une procédure d'exploitation de routes multiples afin d'éviter les phénomènes de congestion.

### 5.2.1 Utilisation d'un attribut « TRIP Route » modifié

La spécification actuelle du protocole TRIP permet de sélectionner et d'annoncer (si elle existe) une seule et unique route par destination. Le format de l'attribut "TRIP Route" définit par la RFC3219 est illustré par la figure 2.

Il contient quatre champs 21, 22, 23 et 24, correspondant respectivement à « Address Family », « Application Protocol », « Length » et enfin « Address ». Les trois premiers champs 21, 22 et 23 présentent une taille de deux octets alors que le dernier champ 24 est de taille variable.

L'attribut « TRIP Route » peut être vu comme un itinéraire indiquant un chemin à suivre pour joindre une destination donnée. Cet itinéraire indique plusieurs domaines de téléphonie par lesquels la communication passera pour atteindre la destination. Dans ce mode de réalisation de l'invention, « TRIP Route » est modifié pour transporter une information de congestion. Le format de l'attribut « TRIP Route » modifié permet donc de définir un état de congestion pour une route donnée. Cette route est définie par les champs qui composent l'attribut. Pour autoriser l'annonce de plusieurs routes TRIP servant une même destination, l'attribut « TRIP Route » est donc modifié comme le montre la figure 3.

Il contient six champs, numérotés de 31 à 36, et dont la dénomination et la taille sont les suivantes :
- un champ 31 « Flag » d'une taille d'un octet ;
- un champ 32 « Path Identifier » d'une taille de trois octets ;
- un champ 33 « Address family » d'une longueur de deux octets ;
- un champ 34 « Application Protocol » d'une longueur de deux octets ;
- un champ 35 « Length » d'une longueur de deux octets ;
- un champ 36 « Address » d'une longueur variable.

Les champs « Address Family », « Application Protocol », « Length » et « Address » sont définis dans la section 5.1.1.1 de la norme RFC3219, et rappelés en annexe de la présente description.

Les champs nouveaux selon l'invention ont les significations suivantes :
- le champ 31 « Flag » est utilisé pour caractériser la route annoncée. Dans le cadre de cette mise en œuvre, la valeur "1" est utilisée pour indiquer aux LS voisins que cette route est celle sélectionnée par le processus TRIP local. Cette indication sert à informer le LS voisin de la préférence locale en cas de routes multiples. Sauf indication contraire de la part du LS voisin, cette route sera utilisée par défaut pour acheminer le trafic vers la destination finale. D'autres valeurs peuvent être spécifiées en fonction des besoins.

Par exemple, dans un mode de réalisation particulier, cet indicateur pourrait renseigner le niveau de Qualité de Service. Dans un autre mode de réalisation, dans lequel l'ensemble des liens réseaux est sécurisé, cet indicateur peut préciser si cette route est principale ou secondaire (ou « de secours », ou « de remplacement »).
- le champ 32 « Path Identifier » est introduit pour différencier les chemins servant la même destination, c'est-à-dire un ou plusieurs préfixes. Ce champ contient une valeur renseignée par l'opérateur de téléphonie. Cette valeur dépend des implémentations TRIP et elle n'a de signification que localement.

Au sein de cet attribut modifié, le champ « Flag » 31 est notamment utilisé pour indiquer la nature de la route (principale ou de secours, lors de la survenance de phénomènes de congestion). Le premier bit (également appelé champ « C ») de ce champ « Flag », d'une longueur d'un octet, prend la valeur 0 ou 1 en fonction de la nature de la route. Il s'agit donc d'un champ qui permet d'indiquer si l'on se trouve en présence d'une route de secours permettant de pallier un phénomène de congestion (valeur 1) ou d'une simple route secondaire d'acheminement dans le cas d'une utilisation de routes multiples pour le transfert des appels téléphoniques (valeur 0). Ainsi, une valeur « 1 » dans ce mode de réalisation permet d'indiquer que l'itinéraire contenu dans l'attribut « TRIP Route » modifié est un itinéraire de remplacement dont l'objectif est de détourner le trafic d'un domaine de téléphonie congestionné.

Naturellement, d'autres modes de réalisation peuvent être envisagés, tels que par exemple l'indication d'un pourcentage de la charge d'une route en lieu et place d'une simple valeur binaire.

### 5.2.2 Procédure générale d'activation

On décrit, en relation avec la figure 6, les différentes phases permettant la mise en œuvre de la procédure d'activation. Cette procédure est constituée de cinq étapes :
- activation (601) d'une capacité de propagation de routes multiples entre les deux LS voisins ;
- dans le cas d'un trafic normal, adoption (602) d'un comportement TRIP classique et annonce d'une et une seule route par destination ;
- déploiement (603) de moyens de mesure et de monitoring des ressources téléphoniques afin de détecter les congestions et la pénurie des ressources ;
- détection (604) d'un phénomène de congestion 6041 : un LS TRIP envoie alors une route de secours avec une indication particulière vers l'ensemble de ses voisins. Le LS ayant reçu ces annonces n'écrase pas les routes déjà installées dans ses tables de routage, mais ajoute ces nouvelles routes ;
- Suppression (605), à la demande du LS local, des nouvelles routes et retour à l'état d'adoption du comportement TRIP classique (602), lorsque les phénomènes de congestion ont disparu.

### 5.2.3 Activation de la capacité de gestion des routes multiples entre deux domaines de téléphonie voisins

Afin d'éviter les phénomènes de congestion et d'augmenter la capacité de traitement des appels inter-domaines l'activation de la procédure de l'invention est réalisée comme suit :
- négociation d'une capacité de gestion des routes multiples lors de l'ouverture d'une session TRIP. A l'ouverture de la session TRIP, les pairs TRIP voisins activent un mécanisme de gestion de routes multiples par le biais de l'échange d'une capacité (en anglais *Capability*) *"Route Multiple Capability" ;*
- lorsque la phase d'échange des « *Capabilities* » est achevée, les pairs TRIP voisins adoptent le comportement classique TRIP et n'échangent par défaut qu'une et une seule route TRIP par destination téléphonique. Néanmoins, le format utilisé pour envoyer les routes dans un message de mise à jour est le nouvel attribut *"TRIP Route"* modifié précédemment définit.

### 5.2.4 Identification des routes de secours

Pour annoncer les routes TRIP, le nouvel attribut *"TRIP Route"* modifié est adopté par défaut. Ce format de l'attribut *"TRIP Route"* contient un champ *"Flag" (c.f. 5.2.1).* Le champ *"Flag"* est utilisé pour caractériser la route annoncée. La valeur "1" est utilisée pour indiquer aux LS voisins que cette route est celle sélectionnée par le processus TRIP local. Cette indication sert à informer le LS voisin de la préférence locale en cas de routes multiples. Sauf indication contraire de la part du LS voisin, cette route sera utilisée par défaut pour acheminer le trafic vers la destination finale.

Dans le cadre de la prévention de la congestion, les routes de secours sont identifiées par un champ *"Flag"* dont la valeur est supérieure à *"1"* et inférieure au maximum de routes multiples supportées par les voisins LS (ce nombre est négocié au moment de l'ouverture de la session TRIP). Ainsi, une route de secours est caractérisée par une valeur du champ *"Flag"* égale à *"2",* et ainsi de suite. Quand la route principale est congestionnée, une deuxième route est annoncée avec un champ *"Flag"* dont la valeur vaut *"2".* Si cette route est congestionnée à son tour, une troisième route peut être annoncée avec un champ *"Flag"* valant *"3"*, et ainsi de suite.

Dans l'hypothèse où un LS local ne dispose pas de route de secours, il positionne le premier bit du champ *"Flag"* (figure 3, champ 31), également appelé champ "*C*", à *"1".* Ce positionnement sert à indiquer aux autres LS que la route principale est congestionnée. Lorsque la route ne subit pas de congestion, la valeur de ce champ est *"0"*.

Dans un autre mode de réalisation, il est également envisageable d'adopter cette procédure même en cas de présence de plusieurs routes, afin d'indiquer l'état de congestion de toutes les routes.

### 5.2.5 Détection de phénomènes de congestion téléphoniques

Chaque opérateur téléphonique met en œuvre des mécanismes de mesure et de suivi (monitoring) de son ITAD afin d'avoir un aperçu en temps réel (ou au moins à court et moyen termes) de sa capacité locale de gestion de nouveaux appels téléphoniques (qui peut par exemple s'exprimer sous la forme d'un taux de rejet de nouveaux appels).

Ces mécanismes de mesure peuvent être réduits au simple contrôle de la charge des équipements invoqués pour l'établissement des appels téléphoniques. Chaque opérateur peut configurer un seuil au delà duquel il considère que son ITAD sera/est congestionné. Ce seuil peut être commun à tous les opérateurs ou être local. De plus, deux seuils peuvent être distingués : un seuil de congestion au-delà duquel les phénomènes de congestion sont potentiellement possibles (c'est-à-dire que les phénomènes de congestion ne sont pas encore observés mais sont potentiellement possibles dans le futur), et un seuil de congestion reflétant l'occurrence effective des phénomènes de congestion. La notification de pré-congestion peut être envoyée selon une politique locale à chaque opérateur. Pour illustrer ceci, on peut imaginer qu'un opérateur donné envoie une notification de pré-congestion quand trois quarts de ses ressources internes ou des liens le reliant à d'autres domaines sont utilisés. Ce taux peut varier selon les opérateurs. Il peut aussi être exprimé sous forme de pourcentage de ressources utilisées/ressources disponibles.

Dans le cadre de ce mode de réalisation de l'invention, il n'est pas fait de distinction entre ces deux seuils, indifféremment référencés par le terme « *SeuilCongestion* ». A noter que l'on utilise indifféremment, dans la présente description, les deux termes « pré-congestion » et « congestion », ainsi que « pré-congestionné » et « congestionné ».

### 5.2.6 Envoi de routes multiples

Ainsi que cela a déjà été mentionnés, les serveurs de localisation LS, également appelés pairs TRIP, échangent des informations de routage tel que spécifié dans le protocole TRIP. A l'ouverture de la session TRIP entre les LS TRIP, ils échangent la capacité de l'activation du mécanisme de routes multiples incluant le nombre maximum des routes multiples qu'un LS local peut annoncer à son voisin. Néanmoins, les LS TRIP ne procèdent pas à une annonce automatique et systématique des routes multiples mais se conforment aux spécifications TRIP classiques (une seule route est annoncée par destination/préfixe téléphonique).

Une fois que le seuil de congestion est atteint dans un ITAD (c'est-à-dire que les ressources locales et/ou les liens inter-domaines sont en état de pré-congestion ou de congestion), le LS local envoie une annonce contenant une indication de congestion à l'ensemble de ses voisins auxquels cet ITAD a envoyé des annonces de routes. A la réception de ces messages UPDATE avec indication de congestion, les LS récepteurs envoient des routes de secours vers les destinations dont le chemin principal passe par le domaine congestionné (i.e. annonces de préfixes téléphoniques joignables à partir de l'ITAD congestionné). Ces nouvelles routes (vers ces destinations) ne remplacent pas les routes déjà présentes dans les tables de routage des LS réceptrices de l'annonce TRIP. Cette annonce contient des routes par le biais de l'attribut *"TRIP Route"* modifié. Ce dernier renseigne en particulier un champ nommé *"Flag"* dont la valeur est positionné à *"2"* pour informer le LS voisin que cette route est la route de secours d'une autre route déjà présente dans ses tables de routage.

Cette procédure peut être réitérée si la route de secours est congestionnée à son tour. Le champ « flag » est incrémenté de 1.

Dans le cas où un LS d'un ITAD, voisin à celui congestionné, ne dispose pas de route de secours et que la route principale est congestionnée, il utilise le champ *"C"* (en le valorisant) à *"1"* pour indiquer à ses voisins que cette route est congestionnée.

Quand le seuil de congestion n'est plus atteint, le LS congestionné envoie un message UPDATE en repositionnant le bit « C » à « 0 ». A la réception de cette mise à jour, les LS d'ITADs voisins à celui congestionné, i.e ceux qui ont émis des annonces de mise à jour des routes de secours, envoient des messages UPDATE avec un attribut « WithdrawnRoutes » pour désinstaller les routes de secours des tables de routage de leurs voisins TRIP respectifs.

En conséquence, l'utilisation de mémoire requise par les tables de routage sera ainsi réduite.

### 5.2.7 Signalisation de la route sélectionnée

Quand un serveur de proximité (PS) veut établir un appel vers une destination donnée, il consulte les tables de routage LS qui maintiennent une ou plusieurs routes dont une n'est pas congestionnée. La route sélectionnée est la dernière route reçue par le LS local comme route de secours d'une route déjà présente dans les tables de routage. La route principale est identifiée par un champ *"Flag"* dont le premier bit est positionné à *"1"*. Le processus de sélection de route peut prendre en compte les bits suivants du champ « flag » pour la sélection de la meilleure route. Ainsi, le processus de sélection de route pourra choisir la route dont la valeur de champ « flag » est le plus grand. Plus généralement, une information de sélection autre que le champ « flag » peut être prévue, pour optimiser la sélection d'une route secondaire parmi plusieurs routes disponibles afin d'éviter les routes congestionnées.

Comme cela a déjà été indiqué, dans le cadre de la téléphonie sur IP, les informations contenues dans les TRIB aident les serveurs de VoIP à choisir le chemin à suivre pour joindre une destination téléphonique donnée. Par exemple, dans le cas d'une plateforme de service SIP, le serveur de proximité (PS) questionne les LS locaux sur la disponibilité de routes pour joindre un préfixe donné. Dans le cas où la procédure de prévention de la congestion est activée entre des ITAD voisins, deux scénarii sont possibles :
- le serveur de proximité (PS) a choisi la route sélectionnée par le processus de sélection de route TRIP classique. La route principale n'est donc pas congestionnée. Dans ce cas, les messages SIP ne sont pas impactés. La requête SIP suivra alors le chemin inter ITAD comme sélectionné par le processus de sélection de route TRIP classique ;
- le serveur de proximité (PS) a choisi une route secondaire, soit pour prévenir une congestion de la route principale soit parce que cette route principale est déjà congestionnée. Le champ *"Route"* des messages SIP doit être valorisé pour être mis en conformité avec l'attribut *"RoutedPath"* de la route choisie par le serveur de proximité (PS). Une telle mise en conformité est réalisée par les serveurs de proximité (PS) en insérant un champ *"Route"* dont la valeur est déduite de la liste des segments ITAD_PATH comme renseignés par l'attribut *"RoutedPath*". Pour ce faire, le champ *"Route"* du protocole SIP, défini par la RFC3261, est modifié selon la grammaire BNF suivante (le texte en gras met en évidence les modifications apportées au champ "Route") :

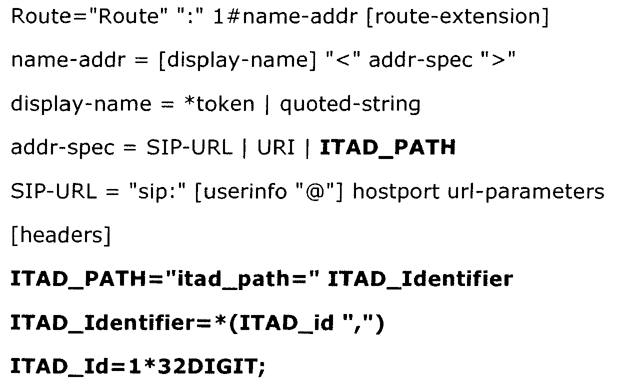

Le champ ITAD_PATH est une liste d'identifiants des domaines de téléphonies ITAD qui seront traversés par les messages SIP.

### 5.3 Exemple

Les figures 7A et 7B illustrent un exemple de mise en œuvre de l'invention. Sur la figure 7A, le système fonctionne normalement. Sur la figure 7B, un phénomène de congestion apparaît dans l'ITAD3.

Comme cela apparaît sur la figure 7A, le domaine ITAD2 dispose de plusieurs routes pour joindre la destination D. Une première route qui traverse les domaines ITAD8, ITAD9 et ITAD10, une deuxième route qui traverse les domaines ITAD3, ITAD4, ITAD10, et une troisième route qui traversent les domaines ITAD5, ITAD6, ITAD7 et ITAD10.

Aucune indication de congestion n'est reçue de la part de ses voisins TRIP. Ainsi, les LS du domaine ITAD2 choisissent une seule route pour joindre D et la sélectionne comme meilleure route. Cette route est la route R2 traversant ITAD3, ITAD4 et ITAD10. ITAD2 met à jour les informations relatives à cette route et l'annonce à ITAD1.

Supposons maintenant que des congestions 70 sont détectées dans le domaine ITAD3 comme l'illustre la figure 7B.

ITAD3 ne dispose que d'une seule route pour joindre D, ainsi il notifie son voisin, i.e. ITAD2, que la route pour joindre D est congestionnée, en envoyant un message de mise à jour avec le champ "C" positionné à "1".

A la réception de ce message, ITAD2 sélectionne une route de secours à la route principale qu'il a déjà envoyée à ITAD1. Dans l'exemple de la figure 7B, la route secondaire est celle qui passe par les domaines ITAD8, ITAD9 et ITAD10. Cette route secondaire est identifiée par le champ "Flag" positionné à 2.

Par conséquent, ITAD1 dispose de deux routes, dont une est congestionnée. Ce domaine peut alors acheminer des appels vers D sans passer par le domaine congestionné et donc satisfaire ses clients.

### 5.4 Deuxième mode de réalisation : remplacement d'une route existante

On présente ci-dessous un second mode de réalisation de l'invention permettant de prévenir les phénomènes de congestion inter-domaines lorsque des mécanismes de gestion des routes multiples, tels que ceux décrit précédemment, ne sont pas supportés. Ce mode de mise en œuvre du procédé selon l'invention permet de décharger une route en état de pré-congestion et d'évacuer le trafic via d'autres chemins. Il repose sur l'utilisation d'un mécanisme d'échange de routes téléphoniques inter-domaines, de type TRIP. D'autres protocoles de routage inter-domaines téléphoniques peuvent bien sur être utilisés. Les modifications ainsi que la procédure à suivre sont détaillées ci-dessous.

### 5.4.1 Utilisation d'un attribut « TRIP Route » modifié

Au démarrage d'une session TRIP entre deux LS voisins, ces derniers échangent leurs capacités (« Capabilities ») de gestion respectives, en termes d'extensions supportées, comme décrit dans le document RFC3219. Le format de l'attribut optionnel, c'est-à-dire l'attribut « Capability » est décrit par la figure 1. On note que cet attribut est optionnel et n'est pas forcément supporté par toutes les implémentations TRIP.

Il contient trois champs 11, 12 et 13:
- un premier champ 11 « Capability Code», d'une longueur de deux octets contient un code identifiant la « Capability » ;
- un second champ 12 « Capability Length », d'une longueur de deux octets également, contient la longueur de la « Capability » ;
- enfin, un troisième champ 13 « Capability Value », dont la taille est variable, contient la valeur de la « Capablity ».

Pour éviter les erreurs lors d'échange de messages UPDATE contenant des attributs "TRIP Route" modifiés indiquant un phénomène de congestion, éviter une clôture des sessions TRIP et indiquer aux pairs d'un LS donnés le support d'indication de routes congestionnées, on introduit une nouvelle « Capability » nommée « *Congestioned Route Capability* » dont le « Capability Code » (code de définition de la capacité) est égal à 4.

Le format du champ 13 «Capability Value » de l'attribut «Capability Information » spécifique au « Congestioned Route Capability » est illustré par la figure 4. Il comprend une série de champs 41 « Address Family» (Famille d'adresse) et de champs 42 «Application Protocol » (Protocole d'application), chacun de ces champs présentant une taille de deux octets. Un pair LS peut indiquer à ses voisins les types d'adresses supportées et qui seront utilisées lors de la valorisation des champs des routes TRIP. Un ou plusieurs couples (*Address Family, Application Protocol*) peuvent être renseignés. En relation avec la figure 4, un premier couple 420 est formé des champs 41 et 42 et un second couple 430 est formé des champs 43 et 44 par exemple.

Les significations des champs 41, 42, 43, 44 *"Address Family"* et *"Application Protocol"* sont les mêmes que celles décrites dans la section 5.1.1 de la RFC3219, et détaillées en annexe de la présente description.

Ainsi, selon l'invention, afin de permettre d'annoncer les routes TRIP entre pairs LS supportant la « *Congestioned Route Capability* », l'attribut « TRIP Route » est modifié comme le montre la figure 5.

Il contient cinq champs, numérotés de 51 à 56, et dont la dénomination et la taille sont les suivantes :
- un champ 51 «C» d'une taille d'un bit ;
- un champ 53 « Address family » d'une longueur de deux octets ;
- un champ 54 « Application Protocol » d'une longueur de deux octets ;
- un champ 55 « Length » d'une longueur de deux octets ;
- un champ 56 « Address » d'une longueur variable.

Les champs « Address Family », « Application Protocol », « Length » et « Address » sont définis dans la section 5.1.1.1 de la norme RFC3219, et reportés en annexe de la présente description.

Les champs nouveaux selon l'invention ont les significations suivantes:
- le champ 51 « C » est utilisé pour caractériser la route annoncée. Il est positionné à "0" si la route n'est pas congestionnée et à "1" dans le cas contraire (la longueur de ce champ est 1 bit).

### 5.4.2 Procédure

On décrit, en relation avec la figure 8, les différentes étapes fonctionnelles pour mettre en œuvre la procédure d'activation. Cette procédure est constituée de cinq étapes :
- activation du protocole TRIP (701) entre deux pairs LS. L'échange d'une « Capability » pour indiquer le support des routes modifiés est recommandée (Cette « Capability » a pour but d'indiquer au pair TRIP le support d'indication de route (pré) congestionnée) ;
- dans le cas d'un trafic normal, adoption (702) d'un comportement TRIP classique et annonce d'une et une seule route par destination. Les deux pairs utilisent le format modifié de l'attribut « TRIP Route » pour renseigner les routes à mettre à jour dans les tables de routage.
- déploiement (703) de moyens de mesure et de monitoring des ressources téléphoniques afin de détecter les congestions et la pénurie des ressources ; Ces mécanismes sont orthogonaux à la procédure de propagation de notification de congestion dont le but principal est de prévenir les domaines téléphoniques distants d'un chemin congestionné qui risque d'altérer la qualité de service des appels acheminés via des routes où la congestion est détectée ;
- détection (704) d'un phénomène de congestion (7041) : les LS du domaine concerné envoient un message de suppression de la route principale avec indication de congestion et un message de mise à jour contenant une route de secours vers l'ensemble de ses voisins avec indication de non congestion. Le LS ayant reçu ces annonces installe la route de secours comme nouvelle route principale dans ses tables de routage. La précédente route (congestionnée) peut être conservée si elle est utilisée par un serveur de signalisation pour une session en cours d'établissement. Néanmoins, la route de secours doit être utilisée en priorité. En d'autres termes, le serveur de signalisation doit utiliser en premier lieu la route de secours et non la route congestionnée excepté dans le cas ou la route de secours n'est plus valide ;
- désinstallation (705), à la demande du LS local, de la route de secours et retour à l'état d'adoption du comportement TRIP classique (702), lorsque les phénomènes de congestion ont disparu en utilisant la route principale précédente.

### 5.4.3 Activation de la capacité de gestion des route avec indication de congestion

Pour se prémunir des phénomènes de congestion inter-domaines et augmenter la capacité de traitement des appels inter-domaines, à savoir augmenter la disponibilité du service et diminuer le taux de refus d'établissement d'appel inter-providers, ce mode de réalisation particulier de l'invention met en œuvre la procédure suivante :
- négociation de la capacité de gestion des routes congestionnées lors de l'ouverture d'une session TRIP. A l'ouverture de la session TRIP, les pairs TRIP voisins activent le mécanisme des routes multiples par le biais de l'échange de la capacité (en anglais « Capability ») « Congestioned Route Capability » ;
- une fois que cette phase d'échange des « Capabilities » est achevée, les pairs TRIP voisins adoptent le comportement classique TRIP et n'échangent qu'une et une seule route TRIP par destination téléphonique. Néanmoins, le format utilisé pour envoyer les routes dans un message de mise à jour est le nouvel attribut « TRIP Route » modifié défini au paragraphe 5.4.1.

### 5.4.4 Indication de congestion dans les annonces de route

Pour annoncer les routes TRIP, le nouvel attribut « *TRIP Route »* modifié est adopté par défaut. Ce format de l'attribut « *TRIP Route »* contient le champ « C » permettant d'indiquer qu'une route est congestionnée *(c.f.* 5.4.1*)*.

### 5.4.5 Détection de phénomènes de congestion téléphoniques

Dans ce mode de réalisation, la détection des phénomènes de congestion est réalisée de la même manière que dans le cas de la propagation de routes multiples (c.f. 5.2.5).

### 5.4.6 Envoi de route de secours

Les pairs TRIP échangent des informations de routage comme décrit dans la spécification initiale du protocole TRIP, mais en utilisant le nouveau format de l'attribut « TRIP Route » précédemment décrit (indication de congestion dans les annonces de routes - paragraphe 5.4.4). A l'ouverture de la session TRIP entre les LS TRIP, ils échangent la capacité de support d'annonces de routes avec indication de congestion.

Une fois que le seuil de congestion est atteint dans un ITAD, le LS local envoie une annonce contenant des routes de secours vers les destinations dont le chemin principal passe par le domaine congestionné ou des annonces indiquant que lui-même est en état de congestion. Ces annonces vers ces destinations remplacent les routes déjà présentes dans les LS réceptrices de l'annonce TRIP lorsque celles-ci ne sont pas utilisées par les serveurs de signalisation pour des sessions en cours d'établissement (« in progress », en anglais). Ces annonces, contiennent aussi l'attribut « WithdrawnRoutes » pour indiquer les routes congestionnées à retirer des tables de routage. Ces annonces contiennent des routes renseignées grâce à l'attribut "TRIP Route" modifié décrit précédemment.

Pour les routes de secours, le champ « C » de l'attribut « TRIP Route » est positionnée à 0 alors que pour les routes renseignées par l'attribut « WithdrawnRoutes », le champ « C » est positionné à 1.

Cette procédure peut être réitérée si la route de secours est congestionnée à son tour.

Dans le cas où un LS local ne dispose de route de secours et que la route principale est congestionnée, il utilise le champ « C » (en le valorisant) à 1 pour indiquer à ses voisins que cette route est congestionnée.

### ANNEXE

**RFC3219**

| Code | Famille d'adresse (« Address Family ») |
|---|---|
| 1 | « Décimal Routing Number » |
| 2 | « PentaDecimal Routing Numbers » |
| 3 | « E.164 Numbers » |

| Code | Protocole (« Protocol ») |
|---|---|
| 1 | SIP |
| 2 | H.323-H.225.0-Q.931 |
| 3 | H.323-H.225.0-RAS |
| 4 | H.323-H.225.0-Annex-G |

Longueur (« Length »):
   Correspond à la longueur du champ « Address », en octets ;
Adresse (« Address »):
   Correspond à une adresse (préfixe) du type de famille donné par le champ Famille d'adresse (« Address Family »). La longueur en octets de l'adresse est variable et est déterminée par la longueur de champ de la route.

## Revendications

1. Procédé d'optimisation de l'acheminement de communications entre une pluralité de domaines de téléphonie sur IP, comprenant :
- une phase de détection d'un phénomène de congestion ou de risque de congestion dans un premier domaine de téléphonie sur IP;
- une phase de transmission dans un message de signalisation d'au moins une information relative audit phénomène de congestion ou de risque de congestion, dite information de congestion, à destination d'au moins un deuxième domaine de téléphonie sur IP,
**caractérisé en ce que** ledit message de signalisation est un message de définition d'une route de téléphonie, permettant d'atteindre une destination téléphonique donnée.

2. Procédé selon la revendication 1, **caractérisé en ce qu'**il comprend :
- une phase préalable de négociation d'une capacité d'échange desdites informations de congestion, entre lesdits domaines de téléphonie sur IP ;
- une phase de propagation initiale d'une route principale entre lesdits premier et deuxième domaines de téléphonie sur IP.

3. Procédé selon la revendication 1, **caractérisé en ce que** ladite phase de détection comprend :
- une étape de mesure d'au moins une information représentative d'un niveau de charge et/ou d'un taux de rejet de communication au sein dudit premier domaine de téléphonie sur IP;
- une étape de comparaison de ladite information représentative d'un niveau de charge et/ou d'un taux de rejet avec au moins un seuil prédéterminé, délivrant ladite information de congestion ;
et **en ce que** ladite phase de transmission comprend :
- une étape de propagation d'au moins une route de secours de ladite route principale.

4. Procédé selon la revendication 3, **caractérisé en ce que** qu'il comprend, dans au moins un deuxième domaine de téléphonie sur IP :
- une étape de réception de la ou desdites routes de secours ;
- une étape d'ajout de la ou desdites routes de secours à un ensemble de routes comprenant également ladite route principale.

5. Procédé selon la revendication 4, **caractérisé en ce qu'**il comprend une étape de sélection d'une route de secours parmi au moins deux routes disponibles dans ledit ensemble de routes, en fonction d'une information de sélection transmise avec chacune desdites routes.

6. Procédé selon la revendication 3, **caractérisé en ce qu'**il comprend, dans au moins un deuxième domaine de téléphonie sur IP :
- une étape de réception de ladite route de secours ;
- une étape de substitution d'une route courante par ladite route de secours.

7. Procédé selon la revendication 6, **caractérisé en ce qu'**il comprend une étape de secours de ladite route principale par ladite route de secours au sein d'une table de routage d'un serveur de localisation situé au sein dudit deuxième domaine de téléphonie sur IP.

8. Signal échangé entre deux domaines de téléphonie sur IP d'un système de communication mettant en œuvre une pluralité de domaines de téléphonie sur IP, et véhiculant au moins message de signalisation comprenant au moins un champ indiquant un état de congestion ou de risque de congestion d'au moins un domaine de téléphonie sur IP,
ledit signal étant **caractérisé en ce qu'**il définit une route de téléphonie, permettant d'atteindre une destination téléphonique donnée.

9. Signal selon la revendication 8, **caractérisé en ce que** ledit message de signalisation comprend en outre au moins un champ permettant d'identifier au moins une route passant par ledit domaine de téléphonie sur IP.

10. Signal selon la revendication 8, **caractérisé en ce que** ledit message de signalisation comprend un attribut comprenant les champs suivants :
- un champ (31) d'indication de congestion ;
- un champ (32) d'indication d'un numéro de route de secours ;
- un champ (33) de définition d'une famille d'adresses pour ladite route de secours ;
- un champ (34) de définition d'un protocole d'application associé à ladite route de secours ;
- un champ (35) de définition d'une longueur d'adresse ;
- un champ (36) d'indication de ladite adresse.

11. Equipement d'acheminement d'au moins une route de téléphonie au sein d'un domaine de téléphonie sur IP, comprenant des moyens d'acheminement de communications entre une pluralité de domaines de téléphonie sur IP, lesdits moyens d'acheminement comprenant :
- des moyens de détection d'un phénomène de congestion ou de risque de congestion dans un premier domaine de téléphonie sur IP;
- des moyens de transmission, dans un message de signalisation, d'au moins une information relative audit phénomène de congestion ou de risque de congestion, dite information de congestion, à destination d'au moins un deuxième domaine de téléphonie sur IP
**caractérisé en ce que** ledit message de signalisation est un message de définition d'une route de téléphonie, permettant d'atteindre une destination téléphonique donnée.

12. Programme d'ordinateur, **caractérisé en ce qu'**il comprend des instructions de code de programme pour la mise en œuvre des étapes du procédé selon la revendication 1.

## Patentansprüche

1. Verfahren zur Optimierung der Leitweglenkung von Kommunikationen zwischen einer Vielzahl von Telefoniedomänen über IP, umfassend:
- eine Phase der Detektion eines Phänomens einer Überlastung oder eines Risikos einer Überlastung in einer ersten Telefoniedomäne über IP;
- eine Phase der Übertragung einer Signalisierungsnachricht mindestens einer Information in Bezug auf das Phänomen der Überlastung oder des Risiko der Überlastung, die als Überlastungsinformation bezeichnet wird, an das Ziel mindestens einer zweiten Telefoniedomäne über IP;
**dadurch gekennzeichnet, dass** die Signalisierungsnachricht eine Nachricht zur Definition eines Telefoniewegs ist, der es gestattet, ein gegebenes Telefonieziel zu erreichen.

2. Verfahren nach Anspruch 1, **dadurch gekennzeichnet, dass** dieses umfasst:
- eine vorherige Phase der Verhandlung einer Kapazität für den Austausch der Überlastungsinformationen zwischen den Telefoniedomänen über IP;
- eine Phase der anfänglichen Propagation eines Hauptwegs zwischen der ersten und zweiten Telefoniedomäne über IP.

3. Verfahren nach Anspruch 1, **dadurch gekennzeichnet, dass** die Detektionsphase umfasst:
- einen Schritt der Messung mindestens einer Information, die für einen Lastpegel und/oder eine Rate der Kommunikationsablehnung im Inneren der ersten Telefoniedomäne über IP repräsentativ ist;
- einen Schritt des Vergleichens der Information, die für einen Lastpegel und/oder eine Ablehnungsrate repräsentativ ist, mit mindestens einer vorherbestimmten Schwelle, wobei die Überlastungsinformation geliefert wird;
und dadurch, dass die Übertragungsphase umfasst:
- einen Schritt der Propagation mindestens eines Ersatzwegs des Hauptwegs.

4. Verfahren nach Anspruch 3, **dadurch gekennzeichnet, dass** dieses in mindestens einer zweiten Telefoniedomäne über IP umfasst:
- einen Schritt des Empfangens des oder der Ersatzwege;
- einen Schritt des Hinzufügens des oder der Ersatzwege zu einer Gruppe von Wegen, die auch den Hauptweg umfassen.

5. Verfahren nach Anspruch 4, **dadurch gekennzeichnet, dass** dieses einen Schritt der Auswahl eines Ersatzwegs unter mindestens zwei Wegen umfasst, die in der Gruppe von Wegen verfügbar sind, als Funktion einer Information zur Auswahl, die mit jedem der Wege übertragen wird.

6. Verfahren nach Anspruch 3, **dadurch gekennzeichnet, dass** dieses in mindestens einer zweiten Telefoniedomäne über IP umfasst:
- einen Schritt des Empfangens des Ersatzwegs;
- einen Schritt der Substitution eines aktuellen Wegs durch den Ersatzweg.

7. Verfahren nach Anspruch 6, **dadurch gekennzeichnet, dass** dieses einen Ersatzschritt des Hauptwegs durch den Ersatzweg im Inneren einer Routing-Tabelle eines Lokalisierungsservers umfasst, der im Inneren der zweiten Telefoniedomäne über IP angeordnet ist.

8. Signal, welches zwischen zwei Telefoniedomänen über IP eines Kommunikationssystems ausgetauscht wird, das eine Vielzahl von Telefoniedomänen über IP verwendet, und mindestens eine Signalisierungsnachricht transportiert, die mindestens ein Feld umfasst, das einen Zustand einer Überlastung oder eines Risikos einer Überlastung mindestens einer Telefoniedomäne über IP anzeigt,
wobei das Signal **dadurch gekennzeichnet ist, dass** es einen Telefonieweg definiert, der es gestattet, ein gegebenes Telefonieziel zu erreichen.

9. Signal nach Anspruch 8, **dadurch gekennzeichnet, dass** die Signalisierungsnachricht außerdem mindestens ein Feld umfasst, das es gestattet, mindestens einen Weg zu identifizieren, der durch die Telefoniedomäne über IP verläuft.

10. Signal nach Anspruch 8, **dadurch gekennzeichnet, dass** die Signalisierungsnachricht ein Attribut umfasst, umfassend die folgenden Felder:
- ein Feld (31) zur Anzeige einer Überlastung;
- ein Feld (32) zur Anzeige einer Nummer des Ersatzwegs;
- ein Feld (33) zur Definition einer Familie von Adressen für den Ersatzweg;
- ein Feld (34) zur Definition eines Anwendungsprotokolls, das mit dem Ersatzweg assoziiert ist;
- ein Feld (35) zur Definition einer Adressenlänge;
- ein Feld (36) zur Anzeige der Adresse.

11. Leitweglenkungsausrüstung mindestens eines Telefoniewegs im Inneren einer Telefoniedomäne über IP, umfassend Leitweglenkungsmitteln für Kommunikationen zwischen einer Vielzahl von Telefoniedomänen über IP, wobei die Leitweglenkungsmittel umfassen:
- Mittel zur Detektion eines Phänomens einer Überlastung oder eines Risikos einer Überlastung in einer ersten Telefoniedomäne über IP;
- Mittel zur Übertragung, in einer Signalisierungsnachricht, mindestens einer Information in Bezug auf das Phänomen der Überlastung oder des Risiko der Überlastung, die als Überlastungsinformation bezeichnet wird, an das Ziel mindestens einer zweiten Telefoniedomäne über IP;
**dadurch gekennzeichnet, dass** die Signalisierungsnachricht eine Nachricht zur Definition eines Telefoniewegs ist, der es gestattet, ein gegebenes Telefonieziel zu erreichen.

12. Computerprogramm, **dadurch gekennzeichnet, dass** dieses Programmcodeinstruktionen zur Durchführung der Schritte des Verfahrens nach Anspruch 1 umfasst.

## Claims

1. Method for optimizing the routing of communications between a plurality of telephony over IP domains, comprising:
- a phase of detecting a congestion or risk of congestion phenomenon in a first telephony over IP domain;
- a phase of transmitting, in a signalling message, at least one item of information in relation to said congestion or risk of congestion phenomenon, called item of congestion information, to at least one second telephony over IP domain,
**characterized in that** said signalling message is a message defining a telephony route, making it possible to reach a given telephony destination.

2. Method according to Claim 1, **characterized in that** it comprises:
- a preliminary phase of negotiation of an exchange capability for said congestion information between said telephony over IP domains;
- a phase of initial propagation of a main route between said first and second telephony over IP domains.

3. Method according to Claim 1, **characterized in that** said detection phase comprises:
- a step of measuring at least one item of information representative of a load level and/or of a communication rejection rate within said first telephony over IP domain;
- a step of comparing said item of information representative of a load level and/or of a rejection rate with at least one predetermined threshold, delivering said item of congestion information;
and **in that** said transmission phase comprises:
- a step of propagating at least one backup route to said main route.

4. Method according to Claim 3, **characterized in that** it comprises, in at least one second telephony over IP domain:
- a step of receiving said backup route or routes;
- a step of adding said backup route or routes to a set of routes also comprising said main route.

5. Method according to Claim 4, **characterized in that** it comprises a step of selecting a backup route from among at least two available routes in said set of routes, depending on an item of selection information transmitted with each of said routes.

6. Method according to Claim 3, **characterized in that** it comprises, in at least one second telephony over IP domain:
- a step of receiving said backup route;
- a step of substituting a current route with said backup route.

7. Method according to Claim 6, **characterized in that** it comprises a step of backing up said main route with said backup route within a routing table of a location server situated within said second telephony over IP domain.

8. Signal exchanged between two telephony over IP domains of a communication system implementing a plurality of telephony over IP domains, and conveying at least one signalling message comprising at least one field indicating a congestion or risk of congestion state of at least one telephony over IP domain,
said signal being **characterized in that** it defines a telephony route, making it possible to reach a given telephony destination.

9. Signal according to Claim 8, **characterized in that** said signalling message furthermore comprises at least one field for identifying at least one route passing through said telephony over IP domain.

10. Signal according to Claim 8, **characterized in that** said signalling message comprises an attribute comprising the following fields:
- a congestion indication field (31);
- a field (32) for indicating a backup route number;
- a field (33) for defining a family of addresses for said backup route;
- a field (34) for defining an application protocol associated with said backup route;
- a field (35) for defining an address length;
- a field (36) for indicating said address.

11. Equipment for routing at least one telephony route within a telephony over IP domain, comprising means for routing communications between a plurality of telephony over IP domains, said routing means comprising:
- means for detecting a congestion or risk of congestion phenomenon in a first telephony over IP domain;
- means for transmitting, in a signalling message, at least one item of information in relation to said congestion or risk of congestion phenomenon, called item of congestion information, to at least one second telephony over IP domain,
**characterized in that** said signalling message is a message defining a telephony route, making it possible to reach a given telephony destination.

12. Computer program, **characterized in that** it comprises program code instructions for implementing the steps of the method according to Claim 1.
